# FASCICULE DE BREVET EUROPEEN

(11) **EP 4 093 606 B1**
(45) Date de publication et mention de la délivrance du brevet: **20.03.2024**
(21) Numéro de dépôt: 21706345.2
(22) Date de dépôt: 21.01.2021
(51) Int. Cl.: B32B 3/06, B32B 3/26, B32B 3/30, B32B 7/10, B32B 25/04, B32B 25/12, B32B 25/14, B23Q 11/08, B29C 35/00, B32B 25/08, B32B 27/40, B32B 33/00

(54) **ELÉMENT DE BLINDAGE ANTI-ABRASION ET PROCÉDÉ DE FABRICATION ASSOCIÉ**
ABRASIONSSCHUTZELEMENT UND ZUGEHÖRIGES HERSTELLUNGSVERFAHREN
ANTI-ABRASION SHIELDING ELEMENT AND ASSOCIATED MANUFACTURING METHOD

(30) Priorité: 23.01.2020 FR 2000660
(43) Date de publication de la demande: 30.11.2022
(73) Titulaire: Societe ATCP (Application Technique des Caoutchoucs et des Plastiques), 60270 Gouvieux (FR)
(72) Inventeur: GANNE, Patrick, 60260 LAMORLAYE (FR)
(74) Mandataire: Germain Maureau
(86) Numéro de dépôt international: PCT/FR2021/050111
(87) Numéro de publication internationale: WO 2021/148757

(56) Documents cités:
- CN-B- 106 833 350
- US-A1- 2012 189 854
- US-B1- 6 486 259

## Description

La présente invention se rapporte à un élément de blindage anti-abrasion.

Elle concerne également un procédé de fabrication dont la mise en oeuvre permet la fabrication d'un tel élément de blindage anti-abrasion.

Dans le domaine des équipements de protection de dispositifs ou de machines industrielles, il est souvent nécessaire de protéger lesdits dispositifs ou machines contre les risques d'usure ou de dégradation résultant de leur propre fonctionnement.

En particulier, au cours des procédés industriels faisant intervenir des matériaux de types granulats, les surfaces des différentes machines étant amenées à être mises en contact avec de tels granulats (et en particulier les surfaces de type tôlerie métallique) sont soumises à un phénomène d'abrasion intense, menant à une détérioration accélérée desdites machines requérant des réparations spécifiques voire leur remplacement.

Par exemple, un tel phénomène d'abrasion peut être observé dans des installations minières, sidérurgiques, de cimenterie ou encore agricole.

Il est donc d'usage de protéger les surfaces exposées au phénomène d'abrasion en recouvrant celles-ci par un ou plusieurs éléments de blindage anti-abrasion : ces éléments de blindage anti-abrasion sont avantageusement réalisés dans des matériaux résistant à l'abrasion et sont interposés entre les surfaces exposées et les granulats responsables du phénomène d'abrasion, protégeant ainsi ces surfaces exposées contre toute détérioration.

Il est ainsi connu de fixer des éléments de blindage anti-abrasion présentant une couche protectrice réalisée dans un matériau de type caoutchouc ou polyuréthane sur des surfaces exposées à l'abrasion, et plusieurs modes de fixation sont utilisés.

Il est possible de coller directement la couche protectrice sur une surface à protéger, mais cette méthode présente l'inconvénient d'offrir une fixation peu fiable et de mauvaise qualité.

Il est également possible d'utiliser des éléments de blindage anti-abrasion comportant une couche protectrice en caoutchouc ou polyuréthane solidarisée par vulcanisation sur une plaque de support métallique, la présence de ladite plaque métallique permettant (après perçage) de fixer par boulonnage des tels éléments de blindage anti-abrasion sur les surfaces à protéger au moyen de vis d'ancrage.

Ce mode de fixation par boulonnage présente l'avantage d'être plus fiable et de faciliter le remplacement des éléments de blindage anti-abrasion usés au cours du temps.

En revanche, le procédé de fabrication de tels éléments de blindage anti-abrasion, et en particulier le procédé de vulcanisation de la couche protectrice sur la plaque de support métallique, présente une grande complexité : ce procédé nécessite notamment une étape préparatoire de dégraissage de la plaque support, des étapes de sablage, des étapes d'application d'un ou plusieurs primaires d'accrochages (par exemple de type Chémosil 214 ou 215), et des étapes de séchage pouvant durer chacune plusieurs heures.

Ainsi, le procédé de vulcanisation d'une couche protectrice en caoutchouc ou polyuréthane sur une plaque de support métallique est complexe, longue, onéreuse et utilise des produits nocifs pour les opérateurs et pour l'environnement.

Les documents US 2012/189854 A1 et CN 106 833 350 B divulgent des exemples d'élément de blindage anti-abrasion sans utiliser de l'ébonite.

La présente invention a ainsi pour but de résoudre en tout ou partie les inconvénients précités, en proposant un élément de blindage anti-abrasion présentant un degré de protection contre l'abrasion équivalent à celui des éléments de blindage anti-abrasion de l'état de la technique, mais dont le procédé de fabrication soit plus simple à mettre en oeuvre, plus rapide et moins dangereux.

Un autre objectif de l'invention est de proposer un élément de blindage anti-abrasion qui soit moins lourd et moins onéreux à produire que les éléments de blindage anti-abrasion de l'état de la technique, à degré de protection contre l'abrasion équivalent. Encore un autre but de l'invention est de proposer un élément de blindage anti-abrasion qui puisse être fixé de manière simple et fiable sur une surface à protéger contre le risque d'abrasion.

Enfin, encore un autre but de l'invention est de proposer un élément de blindage anti-abrasion qui soit insensible aux risques de corrosion.

A cet effet, elle propose un élément de blindage anti-abrasion comportant une couche protectrice réalisée dans un matériau de type caoutchouc ou polyuréthane et solidarisée à une plaque de support, ledit élément de blindage anti abrasion étant caractérisé en ce que ladite plaque de support est réalisée en ébonite.

Cet élément de blindage anti-abrasion selon l'invention pour avantage de pouvoir être réalisé par un procédé de fabrication présentant une étape de solidarisation de la couche protectrice sur la plaque de support, notamment par vulcanisation, qui est grandement simplifiée.

En effet, l'ébonite étant un matériau de constitution proche de celle du caoutchouc et du polyuréthane (l'ébonite étant elle-même obtenue par vulcanisation du caoutchouc), la fixation de la couche protectrice sur la plaque de support par vulcanisation ne nécessite aucune étape de dégraissage préalable de ladite plaque de support, aucune étape de sablage, ni aucune utilisation de solvants ou primaires d'accrochages potentiellement dangereux pour les opérateurs et l'environnement.

Ainsi, l'étape de vulcanisation mise en oeuvre par le procédé aboutissant à la fabrication d'un élément de blindage anti-abrasion selon l'invention est beaucoup plus rapide, moins onéreuse et moins complexe à mettre en oeuvre que les étapes de vulcanisation d'une couche protectrice sur une plaque de support métallique connues de l'état de la technique.

De plus, l'ébonite présentant une densité inférieure aux matériaux de types métalliques (notamment l'acier), l'élément de blindage anti-abrasion selon l'invention présente un poids nettement inférieur à celui d'un élément de blindage anti-abrasion comportant une plaque de support métallique.

Il est important de noter par ailleurs que la plaque de support réalisée en ébonite confère à l'élément de blindage selon l'invention des caractéristiques de rigidité et de solidité inférieures par rapport à l'acier mais suffisantes pour une grande majorité des applications pratiques envisagées.

Il peut être nécessaire de modifier l'épaisseur d'une telle plaque de support réalisée en ébonite afin de conserver ces propriétés mécaniques et ainsi offrir un même degré de protection contre l'abrasion à une surface exposée à des granulats.

Par exemple, il est possible, grâce au choix de l'ébonite comme matériau constitutif de la couche protectrice à la place d'un matériau métallique tel que l'acier, de réduire d'environ 40% le poids d'un élément de blindage anti-abrasion, à degré de protection et épaisseur équivalente.

Du fait de ce poids inférieur, un élément de blindage anti-abrasion comportant une plaque de support en ébonite est également moins onéreux à transporter, et sa fixation sur une surface à protégée est plus aisée et moins dangereuse pour des opérateurs. Enfin, la plaque de support en ébonite est beaucoup moins soumise aux phénomènes de corrosion, qui peuvent au contraire endommager un élément de blindage anti-abrasion comportant une plaque de support métallique et détériorer la protection offerte par celui-ci contre l'abrasion.

Ainsi, l'élément de blindage anti-abrasion selon l'invention peut bien être réalisé par la mise en oeuvre d'un procédé incluant une étape de vulcanisation beaucoup moins complexe et moins onéreuse, tout en présentant le même niveau de protection, mais avec un poids réduit, qu'un élément de blindage anti-abrasion comportant une plaque de support réalisée dans un matériau métallique.

Dans une variante, la couche protectrice est au moins partiellement réalisée dans un matériau de type caoutchouc naturel ou caoutchouc synthétique.

Selon une caractéristique, la couche protectrice est réalisée dans un matériau présentant une dureté shore comprise entre 35 et 90 shore.

Selon une autre caractéristique, la couche protectrice est au moins partiellement réalisée dans un matériau de type polyuréthane de coulée ou polyuréthane malaxable. Il est également envisageable que la couche protectrice présente un ou plusieurs inserts réalisés dans un matériau de type céramique, granulat ou charge minérale, afin de limiter l'usure de ladite couche protectrice lorsque celle-ci est exposée à un phénomène d'abrasion.

De même, il est envisageable que la plaque de support présente un ou plusieurs inserts réalisés dans un matériau de renforcement, comme par exemple un matériau de type fibre de verre, fibre métallique, métal déployé, corde pneumatique, tôle perforée ou corde à piano, de manière à renforcer les caractéristiques mécaniques de ladite plaque de support.

La plaque de support peut également présenter un pli EP (polyamide/polyester). Avantageusement, la couche protectrice présente un revêtement réalisé dans un matériau de type polyéthylène (par exemple, polyéthylène à haute densité), de manière à augmenter un coefficient de glissement de ladite couche protectrice.

Dans la suite de cette description, on désignera par le terme « procédé selon l'invention » un procédé de fabrication dont la mise en oeuvre permet de réaliser un élément de blindage anti-abrasion selon l'invention.

Selon une autre possibilité, la plaque de support présente une épaisseur comprise entre 3 millimètres et 20 millimètres.

Selon une caractéristique, la couche protectrice présente une épaisseur comprise entre deux et quatre fois celle de la plaque de support.

Ainsi, la plaque de support représente environ entre 20% et 30% de l'épaisseur totale d'un élément de blindage anti-abrasion selon l'invention.

Selon une autre possibilité,_la plaque de support présente un module de Young compris entre 2000 MPa et 2 500 MPa.

Dans un premier mode de réalisation, l'élément de blindage anti-abrasion est dénué d'orifice ou perçage le traversant.

Dans ce premier mode de réalisation, l'élément de blindage anti-abrasion peut par exemple être fixé par collage sur une surface à protéger des risques d'abrasion.

Dans un second mode de réalisation, en variante du premier mode de réalisation décrit ci-dessus, l'élément de blindage anti-abrasion comporte au moins un orifice traversant adapté pour recevoir un élément d'ancrage, ledit orifice traversant de part en part la couche protectrice et la plaque de support selon un axe d'orifice et présentant :
- une première portion, ménagée dans la couche protectrice et débouchant sur une face externe de ladite couche protectrice,
- une deuxième portion, comportant une partie de couche ménagée dans la couche protectrice et une partie de plaque ménagée dans la plaque de support, et
- une troisième portion, ménagée dans la plaque de support et débouchant sur une face externe de ladite plaque de support.

Aussi, dans ce second mode de réalisation, qui est un mode facultatif, il est prévu de ménager, à travers l'élément de blindage anti-abrasion, un tel orifice traversant qui peut par exemple être adapté pour recevoir une vis d'ancrage, apte à coopérer avec un écrou et/ou un boulon afin de permettre une fixation par boulonnage de l'élément de blindage anti-abrasion selon l'invention sur une surface à protéger des risques d'abrasion. Il est à noter que l'élément de blindage anti-abrasion peut comporter un ou plusieurs orifices traversant, selon notamment la surface de l'élément de blindage anti-abrasion.

Dans ce second mode de réalisation, et selon une possibilité, la première portion présente une dimension transversale, mesurée perpendiculairement à l'axe d'orifice, inférieure à une dimension transversale, mesurée perpendiculairement à l'axe d'orifice, de la deuxième portion,
et dans lequel la troisième portion présente une dimension transversale, mesurée perpendiculairement à l'axe d'orifice, inférieure à ladite dimension transversale de ladite première portion.

Il découle logiquement de cette caractéristique que la deuxième portion présente une dimension transversale supérieure à celle de la troisième portion.

La partie de plaque de la deuxième portion présente donc une surface d'appui permettant d'assurer, éventuellement par l'intermédiaire de pièces mécaniques disposées sur ladite surface d'appui, un appui de l'élément d'ancrage introduit dans l'orifice.

On notera que, dans le cas où l'orifice traversant présente une géométrie de type cylindrique, la dimension transversale des première, deuxième et troisième portions correspond respectivement à un diamètre de l'orifice traversant au niveau desdites première, deuxième et troisième portions.

Selon une autre possibilité, l'élément de blindage anti-abrasion comporte une platine, réalisée dans un matériau de type métallique, disposée dans la partie de plaque de la deuxième portion de l'orifice traversant.

Par exemple, la platine peut être une rondelle présentant un orifice central adapté pour coopérer avec une tige d'une vis d'ancrage.

Selon une caractéristique, la platine est réalisée en acier.

Avantageusement, la platine affleure une face interne de la plaque de support.

Selon une possibilité, l'élément de blindage anti-abrasion comporte une lamelle intermédiaire, réalisée en ébonite, disposée dans la partie de couche de la deuxième portion de l'orifice et en contact avec la platine.

De même que pour la platine, il est envisageable que la lamelle intermédiaire présente un orifice central adapté pour coopérer avec une tige d'une vis d'ancrage.

De la sorte, la platine et la lamelle intermédiaire permettent de réaliser un appui de l'élément d'ancrage dans l'orifice :
- la platine est disposée dans la partie de plaque de la deuxième portion de l'orifice, en appui sur la surface d'appui de ladite deuxième portion,
- la lamelle intermédiaire recouvre cette platine et offre à l'élément d'ancrage (par exemple, la tête d'une vis d'ancrage) une surface de support affleurant la première portion de l'orifice.

L'élément d'ancrage peut ainsi être introduit dans l'orifice depuis la face externe de la couche protectrice et positionné en appui sur ladite surface de support de la lamelle intermédiaire.

On notera que, lorsque l'élément d'ancrage est une vis comportant une tête de vis, la première portion constitue alors un lamage, permettant d'enfouir ladite tête de vis dans l'épaisseur de la couche protectrice : l'esthétique de l'élément de blindage anti-abrasion selon l'invention s'en trouve ainsi améliorée.

Il est important de remarquer que, du fait de la présence de la lamelle intermédiaire et du positionnement de la platine dans la partie de plaque de la deuxième portion de l'orifice, cette platine (réalisée dans un matériau de type métallique) n'est pas en contact avec la couche protectrice pendant l'étape de vulcanisation de ladite couche protectrice sur la plaque de support : seule la lamelle intermédiaire (réalisée en ébonite) est en contact avec la couche protectrice durant cette étape.

De la sorte, il n'est pas nécessaire de réaliser une opération complexe et onéreuse de vulcanisation de la couche protectrice en caoutchouc ou polyuréthane sur un matériau de type métallique constituant la platine.

Seule une étape de vulcanisation de cette couche protectrice en caoutchouc ou polyuréthane sur la lamelle intermédiaire et sur la plaque de support, toutes deux réalisées en ébonite, doit être mise en oeuvre : comme décrit plus haut, cette étape de vulcanisation est alors très simple et peu onéreuse à réaliser.

Selon une possibilité, la platine présente une épaisseur, mesurée selon l'axe d'orifice, qui est inférieure à une épaisseur de la plaque de support et qui est comprise entre 2 millimètres et 6 millimètres.

Selon une caractéristique, la lamelle intermédiaire et la plaque de support sont réalisées dans le même type d'ébonite.

L'invention concerne également un procédé de fabrication d'un élément de blindage anti-abrasion tel que précédemment décrit, ledit procédé mettant en oeuvre une étape de vulcanisation permettant de solidariser ladite couche protectrice, réalisée dans un matériau de type caoutchouc ou polyuréthane, avec ladite plaque de support, réalisée en ébonite.

D'autres caractéristiques et avantages de la présente invention apparaîtront à la lecture de la description détaillée ci-après d'un exemple de mise en oeuvre non limitatif, faite en référence à la figure annexée suivante :
[Fig. 1] est une représentation schématique en coupe d'un élément de blindage anti-abrasion 1 selon l'invention
[Fig. 2] est une représentation schématique en coupe d'un élément de blindage anti-abrasion 1 selon l'invention coopérant avec une vis d'ancrage.

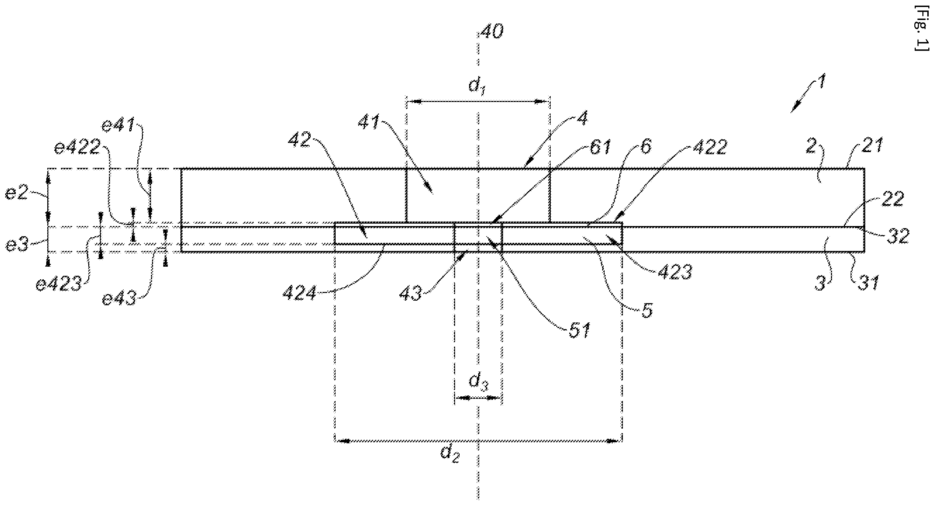

En référence à la figure 1, un élément de blindage anti-abrasion selon l'invention comporte une couche protectrice 2, réalisée dans un matériau de type caoutchouc ou polyuréthane, et s'étendant sur une épaisseur e2 entre une face externe 21 et une face interne 22.

L'élément de blindage anti-abrasion 1 comporte également une plaque de support 3, réalisée en ébonite et s'étendant sur une épaisseur e3 entre une face externe 31 et une face interne 32.

La face interne 22 de la couche protectrice 2 est solidarisée par vulcanisation, par la mise en oeuvre du procédé selon l'invention, avec la face interne 32 de la plaque de support 3.

L'ébonite constituant la plaque de support 3 étant un matériau de nature proche du matériau de type caoutchouc ou polyuréthane constituant la couche protectrice 2 (l'ébonite étant obtenue par vulcanisation d'un tel matériau de type caoutchouc), l'opération de vulcanisation de la couche protectrice 2 sur la plaque de support 3 présente une faible complexité et un faible coût.

En particulier, cette opération ne nécessite aucune étape de dégraissage préalable de la plaque de support 3, aucune étape de sablage, ni aucune utilisation de solvants ou primaires d'accrochages potentiellement dangereux pour les opérateurs et l'environnement.

L'élément de blindage anti-abrasion 1 selon l'invention est destiné à être fixé sur une surface exposée (non représentée) afin de protéger celle-ci contre un phénomène d'abrasion causé par des matériaux de type granulats.

A cet effet, la face externe 31 de la plaque de support 3 peut être fixée sur une telle surface exposée, de manière que la face externe 21 de la couche protectrice 2 est interposée entre lesdits granulats et ladite surface exposée : la couche protectrice 2 subit ainsi le phénomène d'abrasion « à la place » de la surface exposée.

On notera que, étant réalisée dans un matériau de type caoutchouc ou polyuréthane, la couche protectrice 2 est de plus peu sensible à un tel phénomène d'abrasion.

Dans le cas où la surface exposée présente une aire supérieure à celle de l'élément de blindage anti-abrasion 1, il est envisageable de positionner côte à côte plusieurs éléments de blindage anti-abrasion 1 selon l'invention, afin de recouvrir entièrement ladite surface exposée.

Par ailleurs, la plaque de support 3 en ébonite présente des caractéristiques de rigidité et de solidité inférieures par rapport à l'acier mais suffisantes pour une grande majorité des applications pratiques envisagées, permettant ainsi à l'élément de blindage anti-abrasion 1 de procurer un haut niveau de protection contre le phénomène d'abrasion à la surface exposée.

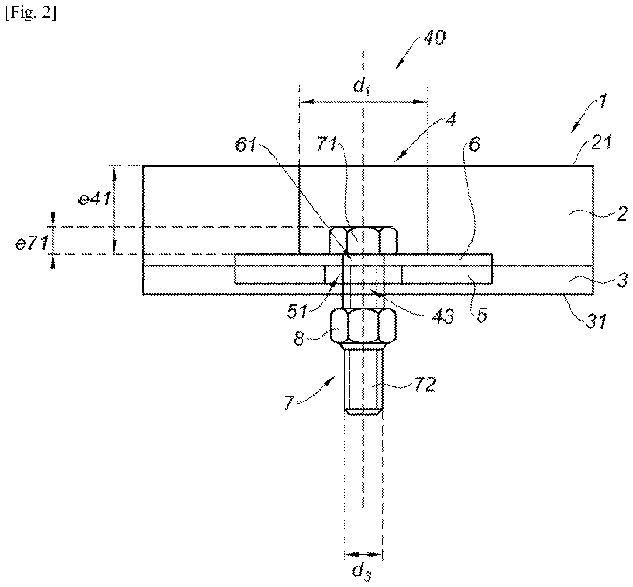

Dans le mode de réalisation représenté par la figure 1, l'élément de blindage anti-abrasion 1 présente un orifice traversant 4, conçu pour une fixation dudit élément de blindage anti-abrasion 1 sur une surface exposée au moyen d'un élément d'ancrage tel que par exemple une vis d'ancrage 7 représentée en Figure 2.

D'autres modes de réalisation sont bien entendu envisageables, notamment un mode de réalisation dans lequel l'élément de blindage anti-abrasion est dénué d'orifice ou de perçage le traversant, et dans ce cas la plaque de support 3 est fixée par collage sur ladite surface exposée.

L'orifice traversant 4 est ménagé traversant entre la face externe 21 de la couche protectrice et la face externe 31 de la plaque de support 3 et s'étend selon un axe d'orifice 40 normal auxdites face externe 21 et face externe 31.

Cet orifice traversant 4 comporte trois portions distinctes selon l'axe d'orifice 40, à savoir :
- une première portion 41, ménagée dans la couche protectrice 2 et débouchant sur la face externe 21 de ladite couche protectrice 2, présentant une dimension transversale d1 (mesurée perpendiculairement à l'axe d'orifice 40),
- une deuxième portion 42, comportant une partie de couche 422 ménagée dans la couche protectrice 2 et une partie de plaque 423 ménagée dans la plaque de support 3, présentant une dimension transversale d2 (mesurée perpendiculairement à l'axe d'orifice 40), et
- une troisième portion 43, ménagée dans la plaque de support 3 et débouchant sur la face externe 31 de ladite plaque de support 3, présentant une dimension transversale d3 (mesurée perpendiculairement à l'axe d'orifice 40).

Comme visible sur la figure 1, la première portion 41 s'étend donc sur une épaisseur e41 (mesurée le long de l'axe d'orifice 40) inférieure à l'épaisseur e2 de la couche protectrice 2.

De même, la troisième portion 43 s'étend sur une épaisseur e43 (mesurée le long de l'axe d'orifice 40) inférieure à l'épaisseur e3 de la plaque de support 3.

De manière similaire, la partie de couche 422 de la deuxième portion 42 présente une épaisseur e422 telle que ladite partie de couche 422 affleure la face interne 22 de la couche protectrice 2.

En d'autres termes, l'épaisseur e422 vérifie la relation : e422 + e41 = e2.

La partie de plaque de support 423 de la deuxième portion 42 présente quant à elle une épaisseur e423 telle que ladite partie de couche 423 affleure la face interne 32 de la plaque de support 3.

L'épaisseur e423 vérifie donc la relation : e423 + e43 = e3.

Par ailleurs, on remarquera que la dimension transversale d3 de la troisième portion 43 est inférieure à la dimension transversale d2 de la deuxième portion 42, de sorte que la deuxième portion 42 présente une large surface d'appui 424 normale à l'axe d'orifice 40.

Grâce à ces caractéristiques géométriques particulières, l'orifice traversant 4 est particulièrement adapté pour recevoir une vis d'ancrage en vue d'une fixation de l'élément de blindage anti-abrasion 1 sur une surface exposée à protéger.

A cet effet, l'élément de blindage anti-abrasion 1 comporte une platine 5 disposée dans la partie de plaque 423 sur la surface d'appui 424, et une lamelle intermédiaire 6 disposée dans la partie de couche 422 sur ladite platine 5.

Cette platine 5 est réalisée dans un matériau de type métallique et est dimensionnée pour occuper entièrement la partie de plaque 423 (c'est-à-dire, la platine 5 présente une épaisseur égale à l'épaisseur e423, et une dimension transversale égale à la dimension transversale d2) : en particulier, elle affleure la face interne 32 de la plaque de support 3.

De même, la lamelle intermédiaire 6 est dimensionnée pour occuper entièrement la partie de couche 422 (c'est-à-dire que la lamelle intermédiaire 6 présente une épaisseur égale à l'épaisseur e422, et une dimension transversale égale à la dimension transversale d2) : en particulier, elle affleure la face interne 22 de la couche protectrice 2.

Il est important de remarquer qu'ainsi la platine 5 n'est pas en contact avec la couche protectrice 2.

De la sorte, lors de la vulcanisation de la couche protectrice 2 sur la plaque de support 3, le matériau de type caoutchouc ou polyuréthane constituant cette couche protectrice 2 est en contact uniquement avec la face interne 32 de ladite plaque de support 3 (réalisée en ébonite) et avec la lamelle intermédiaire 6 (également réalisée en ébonite) : cette opération de vulcanisation, comme précédemment décrit est alors particulièrement simple et peu onéreuse.

En d'autres termes, la présence de la lamelle intermédiaire 6 permet d'éviter tout contact entre la platine 5 (réalisée dans un matériau de type métallique) et la couche protectrice 2 et d'ainsi éviter tous les inconvénients d'une opération de vulcanisation du matériau de type caoutchouc ou polyuréthane constituant la couche protectrice 2 et le matériau de type métallique constituant la platine 5.

On notera que la platine 5 et la lamelle intermédiaire 6 présentent respectivement un orifice 51 et un orifice 56, tous deux centrés sur l'axe d'orifice 40 et présentant une dimension transversale égale à la dimension transversale d3 de la troisième portion 43 de l'orifice traversant 4.

Ainsi, comme visible sur la figure 2, il est possible d'insérer une vis d'ancrage 7 dans l'orifice traversant 4 depuis la face externe 21 de la couche protectrice 2, ladite vis d'ancrage 7 comportant :
- une tête de vis 71 présentant une dimension transversale inférieure à la dimension transversale d1 de la première portion 41 de l'orifice traversant 4 et en appui sur la lamelle intermédiaire 6,
- une tige 72, présentant une dimension transversale inférieure ou égale à la dimension transversale d3 de la troisième portion 43 de l'orifice traversant 4 et traversant les orifices 61 et 51 respectivement de la platine 5 et de la lamelle intermédiaire 6.

Il est ensuite possible de fixer l'élément de blindage anti-abrasion 1 sur une surface exposée à protéger au moyen d'un boulon et/ou d'un écrou 8 coopérant avec ladite tige 72.

On remarquera que la tête de vis 71 présente une épaisseur e71, mesurée selon l'axe de vis 40, inférieure à l'épaisseur e41 de la première portion 41 de l'orifice traversant 4.

Il est envisagé que l'orifice traversant 4 présente une section, orthogonalement à l'axe d'orifice 40, de forme circulaire, la platine 5 et la lamelle intermédiaire 6 présentant alors une forme de rondelle percée en son centre, mais d'autres géométries sont évidemment envisageables.

Il est également envisagé que la platine 5 soit réalisée en acier et que la lamelle intermédiaire 6 soit réalisée dans le même matériau que la plaque de support 3, mais d'autres modes de réalisation sont possibles.

## Revendications

1. Elément de blindage anti-abrasion (1) comportant une couche protectrice (2) réalisée dans un matériau de type caoutchouc ou polyuréthane et solidarisée à une plaque de support (3), ledit élément de blindage anti abrasion (1) étant **caractérisé en ce que** ladite plaque de support (3) est réalisée en ébonite.

2. Elément de blindage anti-abrasion (1) selon la revendication 1, dans lequel l'élément de blindage anti-abrasion est dénué d'orifice ou perçage le traversant.

3. Elément de blindage anti-abrasion (1) selon la revendication 1, comportant au moins un orifice traversant (4) adapté pour recevoir un élément d'ancrage (7), ledit orifice traversant (4) traversant de part en part la couche protectrice (2) et la plaque de support (3) selon un axe d'orifice (40) et présentant :
- une première portion (41), ménagée dans la couche protectrice (2) et débouchant sur une face externe (21) de ladite couche protectrice (2),
- une deuxième portion (42), comportant une partie de couche (422) ménagée dans la couche protectrice (2) et une partie de plaque (423) ménagée dans la plaque de support (3), et
- une troisième portion (43), ménagée dans la plaque de support (3) et débouchant sur une face externe (31) de ladite plaque de support (3).

4. Elément de blindage anti-abrasion (1) selon la revendication 3, dans lequel la première portion (41) présente une dimension transversale (d1), mesurée perpendiculairement à l'axe d'orifice (40), inférieure à une dimension transversale (d2), mesurée perpendiculairement à l'axe d'orifice (40), de la deuxième portion (42), et dans lequel la troisième portion (43) présente une dimension transversale (d3), mesurée perpendiculairement à l'axe d'orifice (40), inférieure à ladite dimension transversale (d1) de ladite première portion (41).

5. Elément de blindage anti-abrasion (1) selon l'une quelconque des revendications 3 et 4, comportant une platine (5), réalisée dans un matériau de type métallique, disposée dans la partie de plaque (423) de la deuxième portion (42) de l'orifice traversant (4).

6. Elément de blindage anti-abrasion (1) selon la revendication 5, dans lequel la platine (5) affleure une face interne (32) de la plaque de support (3).

7. Elément de blindage anti-abrasion (1) selon l'une quelconque des revendications 5 et 6, comportant une lamelle intermédiaire (6), réalisée en ébonite, disposée dans la partie de couche (422) de la deuxième portion (42) de l'orifice traversant (4) et en contact avec la platine (5).

8. Elément de blindage anti-abrasion (1) selon l'une quelconque des revendications 5 à 7, dans lequel la platine (5) présente une épaisseur, mesurée selon l'axe d'orifice (40), qui est inférieure à une épaisseur (e3) de la plaque de support (3) et qui est comprise entre 2 millimètres et 6 millimètres.

9. Elément de blindage anti-abrasion (1) selon l'une quelconque des revendications précédentes, dans lequel la plaque de support (3) présente une épaisseur (e3) comprise entre 3 millimètres et 20 millimètres.

10. Elément de blindage anti-abrasion (1) selon l'une quelconque des revendications précédentes, dans lequel la plaque de support (3) présente un module de Young compris entre 2000 MPa et 2500 MPa.

11. Elément de blindage anti-abrasion (1) selon l'une quelconque des revendications 1 à 10, dans lequel la couche protectrice (2) est au moins partiellement réalisée dans un matériau de type caoutchouc naturel ou caoutchouc synthétique.

12. Elément de blindage anti-abrasion (1) selon l'une quelconque des revendications 1 à 10, dans lequel la couche protectrice (2) est au moins partiellement réalisée dans un matériau de type polyuréthane de coulée ou polyuréthane malaxable.

13. Elément de blindage anti-abrasion (1) selon l'une quelconque des revendications précédentes, dans lequel la couche protectrice (2) présente un ou plusieurs inserts réalisés dans un matériau de type céramique, granulat ou charge minérale.

14. Elément de blindage anti-abrasion (1) selon l'une quelconque des revendications précédentes, dans lequel la couche protectrice (2) présente un revêtement réalisé dans un matériau de type polyéthylène.

15. Elément de blindage anti-abrasion (1) selon l'une quelconque des revendications précédentes, dans lequel la plaque de support (3) présente un ou plusieurs inserts réalisés dans un matériau de renforcement, comme par exemple un matériau de type fibre de verre, fibre métallique, métal déployé, corde pneumatique, tôle perforée ou corde à piano.

16. Procédé de fabrication d'un élément de blindage anti-abrasion (1) conforme à l'une quelconque des revendications 1 à 15, ledit procédé mettant en oeuvre une étape de vulcanisation permettant de solidariser ladite couche protectrice (2), réalisée dans un matériau de type caoutchouc ou polyuréthane, avec ladite plaque de support (3), réalisée en ébonite.

## Patentansprüche

1. Abriebfestes Abschirmelement (1), das eine Schutzschicht (2) aufweist, die aus einem Material vom Typ Kautschuk oder Polyurethan hergestellt ist und an einer Trägerplatte (3) befestigt ist, wobei das abriebfeste Abschirmelement (1) **dadurch gekennzeichnet ist, dass** die Trägerplatte (3) aus Ebonit hergestellt ist.

2. Abriebfestes Abschirmelement (1) nach Anspruch 1, wobei das abriebfeste Abschirmelement keine durchgehende Öffnung oder Bohrung aufweist.

3. Abriebfestes Abschirmelement (1) nach Anspruch 1, aufweisend mindestens eine Durchgangsöffnung (4), die dazu ausgelegt ist, ein Verankerungselement (7) aufzunehmen, wobei die Durchgangsöffnung (4) die Schutzschicht (2) und die Trägerplatte (3) entlang einer Öffnungsachse (40) durchgehend durchdringt und Folgendes aufweist:
- einen ersten Abschnitt (41), der in der Schutzschicht (2) ausgebildet ist und auf einer Außenfläche (21) der Schutzschicht (2) mündet,
- einen zweiten Abschnitt (42), der einen in der Schutzschicht (2) ausgebildeten Schichtteil (422) und einen in der Trägerplatte (3) ausgebildeten Plattenteil (423) aufweist, und
- einen dritten Abschnitt (43), der in der Trägerplatte (3) ausgebildet ist und auf einer Außenfläche (31) der Trägerplatte (3) mündet.

4. Abriebfestes Abschirmelement (1) nach Anspruch 3, wobei der erste Abschnitt (41) eine senkrecht zur Öffnungsachse (40) gemessene Querabmessung (d1) aufweist, die kleiner ist als eine senkrecht zur Öffnungsachse (40) gemessene Querabmessung (d2) des zweiten Abschnitts (42), und wobei der dritte Abschnitt (43) eine senkrecht zur Öffnungsachse (40) gemessene Querabmessung (d3) aufweist, die kleiner ist als die Querabmessung (d1) des ersten Abschnitts (41).

5. Abriebfestes Abschirmelement (1) nach einem der Ansprüche 3 und 4, umfassend eine Platte (5), die aus einem metallischen Material hergestellt ist und im Plattenteil (423) des zweiten Abschnitts (42) der Durchgangsöffnung (4) angeordnet ist.

6. Abriebfestes Abschirmelement (1) nach Anspruch 5, wobei die Platte (5) bündig mit einer Innenfläche (32) der Trägerplatte (3) abschließt.

7. Abriebfestes Abschirmelement (1) nach einem der Ansprüche 5 und 6, umfassend eine Zwischenlamelle (6), die aus Ebonit hergestellt ist und im Schichtteil (422) des zweiten Abschnitts (42) der Durchgangsöffnung (4) und in Kontakt mit der Platte (5) angeordnet ist.

8. Abriebfestes Abschirmelement (1) nach einem der Ansprüche 5 bis 7, wobei die Platte (5) eine entlang der Öffnungsachse (40) gemessene Dicke aufweist, die kleiner ist als eine Dicke (e3) der Trägerplatte (3) und zwischen 2 Millimeter und 6 Millimeter beträgt.

9. Abriebfestes Abschirmelement (1) nach einem der vorhergehenden Ansprüche, wobei die Trägerplatte (3) eine Dicke (e3) zwischen 3 Millimeter und 20 Millimeter aufweist.

10. Abriebfestes Abschirmelement (1) nach einem der vorhergehenden Ansprüche, wobei die Trägerplatte (3) einen Elastizitätsmodul zwischen 2000 MPa und 2500 MPa aufweist.

11. Abriebfestes Abschirmelement (1) nach einem der Ansprüche 1 bis 10, wobei die Schutzschicht (2) mindestens teilweise aus einem Material vom Typ Naturkautschuk oder Synthesekautschuk hergestellt ist.

12. Abriebfestes Abschirmelement (1) nach einem der Ansprüche 1 bis 10, wobei die Schutzschicht (2) mindestens teilweise aus einem Material vom Typ Gusspolyurethan oder knetbares Polyurethan hergestellt ist.

13. Abriebfestes Abschirmelement (1) nach einem der vorhergehenden Ansprüche, wobei die Schutzschicht (2) eine oder mehrere Einlagen aufweist, die aus einem Material vom Typ Keramik, Granulat oder mineralischer Füllstoff hergestellt sind.

14. Abriebfestes Abschirmelement (1) nach einem der vorhergehenden Ansprüche, wobei die Schutzschicht (2) eine Beschichtung aufweist, die aus einem Material vom Typ Polyethylen hergestellt ist.

15. Abriebfestes Abschirmelement (1) nach einem der vorhergehenden Ansprüche, wobei die Trägerplatte (3) einen oder mehrere Einsätze aufweist, die aus einem Verstärkungsmaterial hergestellt sind, wie beispielsweise einem Material vom Typ Glasfaser, Metallfaser, Streckmetall, pneumatisches Seil, Lochblech oder Stahldraht.

16. Verfahren zum Herstellen eines abriebfesten Abschirmelements (1) nach einem der Ansprüche 1 bis 15, wobei das Verfahren einen Schritt des Vulkanisierens implementiert, der es ermöglicht, die Schutzschicht (2) zu befestigen, die aus einem Material vom Typ Kautschuk oder Polyurethan hergestellt ist, wobei die Trägerplatte (3) aus Ebonit hergestellt ist.

## Claims

1. An anti-abrasion shielding element (1) including a protective layer (2) made of a rubber or polyurethane-type material and secured to a support plate (3), said anti-abrasion shielding element (1) being **characterized in that** said support plate (3) is made of ebonite.

2. The anti-abrasion shielding element (1) according to claim 1, wherein the anti-abrasion shielding element (1) is devoid of any hole or bore passing through it.

3. The anti-abrasion shielding element (1) according to claim 1, including at least one through hole (4) adapted to receive an anchoring element (7), said through hole (4) passing right through the protective layer (2) and the support plate (3) along a hole axis (40) and having:
- a first portion (41), formed in the protective layer (2) and opening onto an outer face (21) of said protective layer (2),
- a second portion (42), including a layer part (422) formed in the protective layer (2) and a plate part (423) formed in the support plate (3), and
- a third portion (43), formed in the support plate (3) and opening onto an outer face (31) of said support plate (3).

4. The anti-abrasion shielding element (1) according to claim 3, wherein the first portion (41) has a transverse dimension (d1), measured perpendicularly to the hole axis (40), smaller than a transverse dimension (d2), measured perpendicularly to the hole axis (40), of the second portion (42), and wherein the third portion (43) has a transverse dimension (d3), measured perpendicularly to the hole axis (40), smaller than said transverse dimension (d1) of said first portion (41).

5. The anti-abrasion shielding element (1) according to any one of claims 3 and 4, including a platen (5), made of a metal-type material, arranged in the plate part (423) of the second portion (42) of the through hole (4).

6. The anti-abrasion shielding element (1) according to claim 5, wherein the platen (5) is flush with an inner face (32) of the support plate (3).

7. The anti-abrasion shielding element (1) according to any one of claims 5 and 6, including an intermediate lamella (6), made of ebonite, arranged in the layer part (422) of the second portion (42) of the through hole (4) and in contact with the platen (5).

8. The anti-abrasion shielding element (1) according to any one of claims 5 to 7, wherein the platen (5) has a thickness, measured along the hole axis (40), which is smaller than a thickness (e3) of the support plate (3) and which is comprised between 2 millimeters and 6 millimeters.

9. The anti-abrasion shielding element (1) according to any one of the preceding claims, wherein the support plate (3) has a thickness (e3) comprised between 3 millimeters and 20 millimeters.

10. The anti-abrasion shielding element (1) according to any one of the preceding claims, wherein the support plate (3) has a Young's modulus comprised between 2000 MPa and 2500 MPa.

11. The anti-abrasion shielding element (1) according to any one of claims 1 to 10, wherein the protective layer (2) is at least partially made of a natural rubber or synthetic rubber-type material.

12. The anti-abrasion shielding element (1) according to any one of claims 1 to 10, wherein the protective layer (2) is at least partially made of a cast polyurethane or kneadable polyurethane-type material.

13. The anti-abrasion shielding element (1) according to any one of the preceding claims, wherein the protective layer (2) has one or several inserts made of a ceramic, aggregate or mineral filler-type material.

14. The anti-abrasion shielding element (1) according to any one of the preceding claims, wherein the protective layer (2) has a coating made of a polyethylene-type material.

15. The anti-abrasion shielding element (1) according to any one of the preceding claims, wherein the support plate (3) has one or several inserts made of a reinforcing material, such as for example a glass fiber, metal fiber, expanded metal, tire cord, perforated sheet or piano wire-type material.

16. A method for manufacturing an anti-abrasion shielding element (1) according to any one of claims 1 to 15, said method implementing a vulcanization step allowing securing said protective layer (2), made of a rubber or polyurethane-type material, to said support plate (3), made of ebonite.
